Europäisches Patentamt

European Patent Office (11) Numéro de publication: **0 191 678**

Office européen des brevets **B1**

(12) **FASCICULE DE BREVET EUROPEEN**

(45) Date de publication du fascicule du brevet: **31.10.90** (51) Int. Cl.⁵: **G 06 K 17/00, G 06 K 13/07**

(21) Numéro de dépôt: **86400158.1**

(22) Date de dépôt: **27.01.86**

(60) Demande divisionnaire **89118463.2** déposée le **27/01/86.**

(54) **Dispositif de traitement de titres, en particulier de chèques.**

(30) Priorité: **06.02.85 FR 8501661**

(43) Date de publication de la demande:
**20.08.86 Bulletin 86/34**

(45) Mention de la délivrance du brevet:
**31.10.90 Bulletin 90/44**

(84) Etats contractants désignés:
**AT BE CH DE GB IT LI LU NL SE**

(56) Documents cités:
**EP-A-0 019 080**
**FR-A-2 507 965**
**FR-A-2 538 145**
**US-A-4 082 945**

(73) Titulaire: **ELECTRONIQUE SERGE DASSAULT**
**5, avenue Ingres**
**F-75016 PARIS (FR)**

(72) Inventeur: **Gaucher, Michel**
**6, Avenue des Platanes**
**F-78320 Le Mesnil Saint-Denis (FR)**

(74) Mandataire: **Plaçais, Jean-Yves et al**
**Cabinet Netter, 40, rue Vignon**
**F-75009 Paris (FR)**

Courier Press, Leamington Spa, England.

EP 0 191 678 B1

## Description

L'invention concerne de façon générale un dispositif de traitement de titres en papier-carton, et s'applique en particulier au traitement de chèques.

La Demanderesse a déjà décrit différents aspects de dispositifs de traitement de titres, dans le Brevet français No 75 37 475, publié sous le No 2 334 501, dans la Demande de Brevet français No 83 11 444, publiée sous le No 2 548 804, ainsi que dans les Demandes de Brevet français No 84 10 378, No 84 10 379 et publiées respectivement sous le No 2 566 941, No 2 566 704 et No 2 566 705. Ces Brevet et Demandes de Brevet antérieurs visent surtout les titres de transport ou les documents analogues.

On se préoccupe à l'heure actuelle d'améliorer le traitement des chèques. Il est bien connu que le traitement bancaire des chèques en vue de leur passage en chambre de compensation est onéreux.

Il a été proposé d'y remédier par des solutions dites de "paiement électronique". Mais ces solutions ne semblent pas de nature à faire disparaître complètement les chèques.

Ceux-ci vont donc subsister dans de nombreuses opérations de commerce.

La Demanderesse s'est alors posé le problème de réaliser un dispositif de traitement de chèques qui puisse être implanté localement chez de nombreux commerçants, donc peu onéreux, tout en simplifiant au maximum les opérations qui restent à la charge du client, du commerçant, et de la banque émettrice.

En ce sens, on connaît par exemple des dispositifs qui remplissent un chèque de façon simplifiée, mais transversalement au sens d'écriture habituel sur celui-ci. Un chèque ainsi rempli est souvent mal compris par le titulaire du compte, lequel est habitué à respecter des règles d'écriture différentes, jusqu'alors appliquées strictement. De plus, ces dispositifs sont loin de résoudre complètement le problème posé.

La présente invention vient offrir un dispositif de traitement de titres, en particulier de chèques, qui peut apporter au contraire une solution satisfaisante à ce même problème.

Un premier but de l'invention est de fournir un dispositif de traitement de titres propre à remplir ligne par ligne un document tel qu'un chèque, dans une écriture en clair, à l'aide de moyens d'impression rendus aussi simples et aussi peu onéreux que possible.

Un autre but de l'invention est de réaliser de manière correcte l'entraînement d'un chèque dans un trajet défini par une simple courroie, en assurant que le chèque demeure parallèle à sa direction de déplacement sur tout son trajet.

Un autre but de l'invention est de définir un dispositif dans lequel on détermine de façon très simple une référence de position par rapport au chèque, valable en tous points du trajet de celui-ci.

L'invention a encore pour but de permettre la lecture de caractères standardisés que porte un chèque, en particulier de caractères CMC7, ou E13B, et ce de manière également simple et peu onéreuse.

L'invention a aussi pour but de permettre le post-marquage du chèque par addition sur celui-ci de son montant inscrit selon les caractères standardisés (CMC7, E13B, etc.).

L'invention a encore pour but de permettre l'apposition, au dos d'un chèque, d'une formule d'endos propre au bénéficiaire de ce chèque. Cette formule peut être fixe ou variable.

L'invention concerne un dispositif de traitement de titres, en particulier de chèques, comportant des moyens pour entraîner le titre, à partir d'une entrée, selon un trajet interne du dispositif, ces moyens d'entraînement comprenant une courroie qui s'appuie sur des galets montés sur une plaque porteuse pour suivre un circuit fermé dont une partie définit ledit trajet interne, lequel passe au niveau d'un poste d'impression comprenant, d'un côté du trajet interne, une tête d'impression, montée sur la plaque porteuse du dispositif, et étant sujette à un déplacement vertical et, de l'autre côté du trajet interne, une enclume propre à opérer en toutes positions de la tête d'impression (EP-A-0019080).

Selon l'invention, le montage de la tête d'impression sur la plaque porteuse du dispositif est par articulation, le déplacement vertical de la tête d'impression étant donc selon un arc de cercle tandis que l'enclume est propre à opérer sur ledit arc de cercle.

De préférence, l'enclume possède une partie utile de dimension horizontale au moins égale à la flèche dudit arc de cercle. En pratique, l'enclume est solidaire de la plaque porteuse. Avantageusement, l'enclume reçoit dans un décrochement ladite courroie, en affleurement du reste de sa partie utile, et, du moins pour certaines applications, en continuité avec celle-ci.

La tête d'impression peut être simplement articulée sur un bâti. En variante, la tête d'impression est montée sur un bras d'une structure articulée en parallélogramme déformable, ce qui lui permet de suivre un trajet en arc de cercle tout en restant parallèle à elle-même.

Selon une autre réalisation préférée de l'invention, la courroie entraînant le titre le long d'un bord longitudinal de celui-ci, il est prévu, en aval du premier galet où le titre passe entre galet et courroie un moyen de freinage du titre, tel qu'une brosse, placé le long de son bord longitudinal opposé, ce qui permet d'assurer que le titre est bien introduit, avec son bord longitudinal au contact de ladite plaque porteuse.

Le dispositif peut aussi comporter, en amont dudit premier galet, un détecteur de présence du titre, tel qu'une barrière photoélectrique, placé au voisinage immédiat de ladite plaque porteuse. Il est également utile qu'il comporte, au niveau du poste d'impression, un autre détecteur de présence, tel qu'une barrière photoélectrique, également placé au voisinage immédiat de la plaque d'appui, ce qui fournit une référence de position relativement à deux bords du titre pour l'impression sur celui-ci.

Selon encore un autre aspect de l'invention, dans lequel le titre est un chèque ou analogue, muni de caractères standardisés lisibles automatiquement, il est prévu le long du trajet interne un poste de lecture de ces caractères, ce qui permet de reconnaître le titre ou son émetteur et de déterminer le format d'impression sur ce titre. Les caractères standardisés étant du type magnétique codé, le poste de lecture comprend une tête de lecture de ces caractères, tête qui est aussi utilisée avant lecture pour la pré-magnétisation des mêmes caractères.

D'autres caractéristiques et avantages de l'invention apparaîtront à l'examen de la description détaillée ci-après, ainsi que des dessins annexés, sur lesquels:

la figure 1 rappelle l'allure générale d'un chèque bancaire.

la figure 2 est un schéma de principe du dispositif selon l'invention, accompagné de ses moyens électroniques;

la figure 2A est un organigramme synthétique des opérations de traitement d'un chèque selon l'invention;

la figure 3 illustre de façon plus détaillée la partie électromécanique du dispositif selon l'invention, selon un premier mode de réalisation;

la figure 4A est une vue en perspective illustrant le poste d'entrée d'un chèque dans le dispositif;

la figure 4B est une vue en perspective illustrant l'enclume d'impression du dispositif selon l'invention;

la figure 4C est une vue en perspective montrant un détail d'agencement d'un galet d'entrée du dispositif selon l'invention;

la figure 5 est un schéma détaillé relatif à un premier mode de réalisation d'une tête d'impression;

la figure 5A est un schéma de principe correspondant à la figure 5;

la figure 6 est un schéma détaillé d'un second mode de réalisation du déplacement de la tête d'impression;

la figure 6A est le schéma de principe d'un dispositif à déplacement de la tête d'impression comparable à celui de la figure 6;

la figure 7 est le schéma d'une variante du dispositif de la figure 3, permettant l'impression d'un endos variable; et

la figure 8 est un organigramme des opérations d'impression en clair dans le cas de cette même variante.

Les dessins de caractère certain et/ou faits à l'échelle en particulier les fitures 2A, 3, 4A, 4B, 4C, 5, 6, 7 et 8, pourront servir à compléter la description ainsi qu'à définir l'invention.

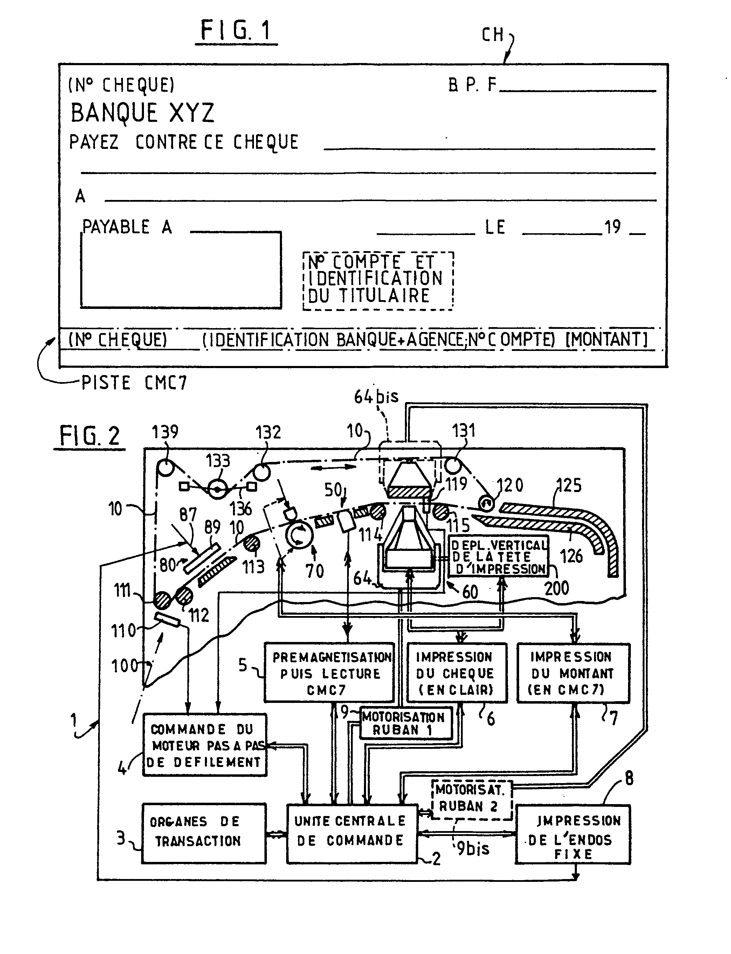

En référence à la figure 1, il est rappelé qu'un chèque doit, avant signature, être complété de son montant en chiffres (emplacement BPF), de son montant indiqué une deuxième fois, impérativement en lettres s'il s'agit d'écriture manuscrite, la seconde inscription étant cependant admise en chiffres si elle est faite en caractères imprimés. Le chèque doit encore comprendre le nom de son bénéficiaire, ainsi que l'indication du lieu et de la date de son émission.

Le titulaire du compte signe le chèque. Après cela, celui-ci est endossé par le commerçant, à l'aide d'une formule d'endos, complétée de la signature du commerçant, puis remis à la banque du commerçant (en principe différente) pour encaissement. Les transferts de fonds relatifs aux chèques font l'objet d'une compensation interbancaire. Cette opération est bien entendu automatisée. Son point de départ est une lecture automatique de la piste en caractères standardisés, en France des caractères CMC7, que comporte le chèque. Cette piste comporte dès l'origine l'indication du numéro du chèque, l'identification de la banque émettrice, de l'agence où se tient le compte du titulaire, ainsi que du numéro de compte de celui-ci. Il reste une information importante qui ne peut figurer sur cette piste dès l'origine, et qui est le montant du chèque. L'opération dite ''post-marquage'' consiste à faire inscrire par une opératrice le montant en caractères CMC7 du chèque, au vu des deux indications de montants que celui-ci comporte en clair. Cette opération, nécessairement manuelle, est l'une des principales causes du coût du traitement bancaire d'un chèque.

On comprendra ci-après que la présente invention permet une simplification considérable des opérations rappelées ci-dessus, qui vont pouvoir être effectuées toutes en même temps, et de manière automatique, dès la conclusion de la transaction qui est payée par ce chèque.

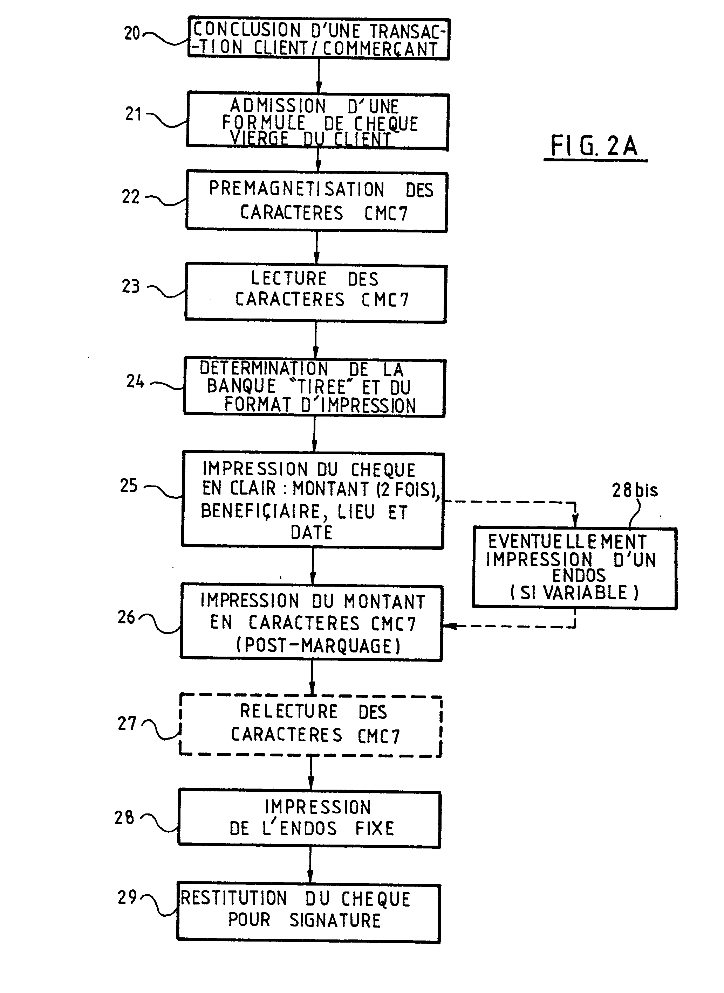

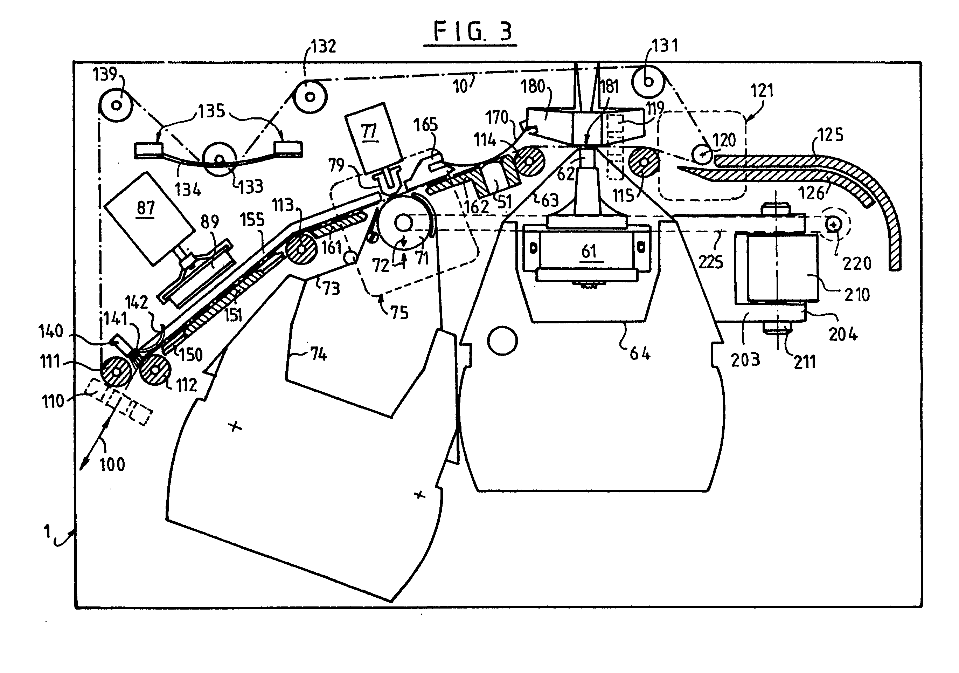

Il est maintenant fait référence aux figures 2 et 3.

Une courroie crantée 10 suit un trajet en circuit fermé le long de galets 111, 112, 113, 114, 115, 120, 131, 132, 133 et 139.

Les galets 111, 112, 113, 114 et 115, qui définissent le trajet interne que pourra subir un chèque à l'intérieur du dispositif, ont une hauteur (transversalement au plan de la figure) qui est du même ordre que la largeur du chèque. Ils sont par conséquent hachurés. Le chèque va être introduit à partir d'un poste d'entrée 100, pour passer entre les galets 111 et 112, et être alors emprisonné entre la partie 10 de la courroie crantée et le galet 112, et ainsi de suite jusqu'au galet 115. Le bord longitudinal inférieur du chèque est maintenu sur le trajet par un flasque que l'on repère en 155, 165 sur la figure 3. Après ce flasque intervient un ressort à lame 170 sur lequel on reviendra plus loin. Se trouve ensuite une enclume d'impression 180.

De l'autre côté, le chèque est, de l'entrée vers la sortie, tenu par un flasque 150, qui est plus élevé en 151 pour servir aussi d'appui d'impression pour l'endos fixe. Après le galet 113 se trouve un autre flasque élevé 161, puis le flasque 162 qui loge en partie basse une tête de lecture de caractères magnétiques (CMC7 ou E13B).

Enfin, au-delà du galet 115, le chèque peut être repris par deux flasques hauts 125 et 126 formant un trajet incurvé permettant au chèque de sortir presque complètement du poste d'impression, puis de revenir en arrière.

Tout près de ces flasques 125 et 126 est prévu le galet cranté 120 d'un moteur pas à pas 121 qui assure l'entraînement de la courroie 10, et par conséquent l'entraînement précis du chèque sur son trajet interne dans le dispositif.

Comme déjà décrit dans les Demandes de brevet antérieures précitées, dans le trajet interne du chèque, la courroie forme avec chaque galet tel que 113, 114 et 115 un angle d'environ 165°, de façon à assurer sur le chèque une pression donnant à celui-ci un entraînement synchrone de celui de la courroie, sans risque de glissement. Toutefois, il a été observé que le premier galet 112 peut dans certaines applications incurver la courroie d'un angle supérieur à 165°, et plus proche de l'angle plat, des valeurs typiques de 170 à 175° étant utilisables.

Il apparaît donc que le chèque va suivre avec une grande précision le mouvement de la courroie 10, donc celui du moteur pas à pas 121. Il faut encore que le dispositif acquière une référence de position sur le chèque. Ceci est effectué par rapport au bord droit et au bord inférieur du chèque (vu recto). Un premier détecteur 110 du genre barrière photoélectrique perçoit l'introduction du chèque dans le poste d'entrée 100, et fait par conséquent démarrer le moteur pas à pas 121. Dès que son bord avant atteint le galet 112, le chèque est entraîné par la courroie 10, et va maintenant suivre celle-ci. La position de la barrière est telle que la mise en marche du moteur pas à pas et l'acceptation du chèque sont liées à une introduction correcte.

Le moteur pas à pas peut alors, dès que nécessaire, entraîner le chèque pour l'amener jusqu'au niveau de la seconde barrière photoélectrique 119, laquelle donne une référence de position du chèque dans le trajet interne à un moment donné. Par la suite, on saura à tout moment déterminer la position du chèque par rapport à l'un quelconque des postes qui doivent travailler sur celui-ci dans le trajet interne, puisque les positions de ces postes sont connues le long du trajet interne, et que le nombre de pas que peut effectuer le moteur 121 est à tout instant déterminé.

Il faut encore assurer que le bord inférieur du chèque est bien au contact de la plaque porteuse 1.

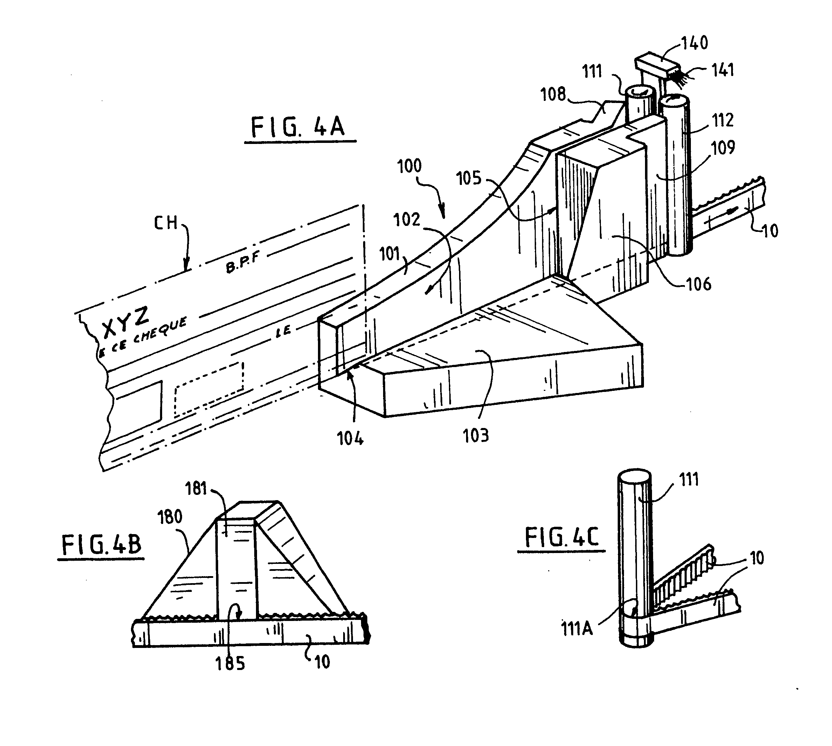

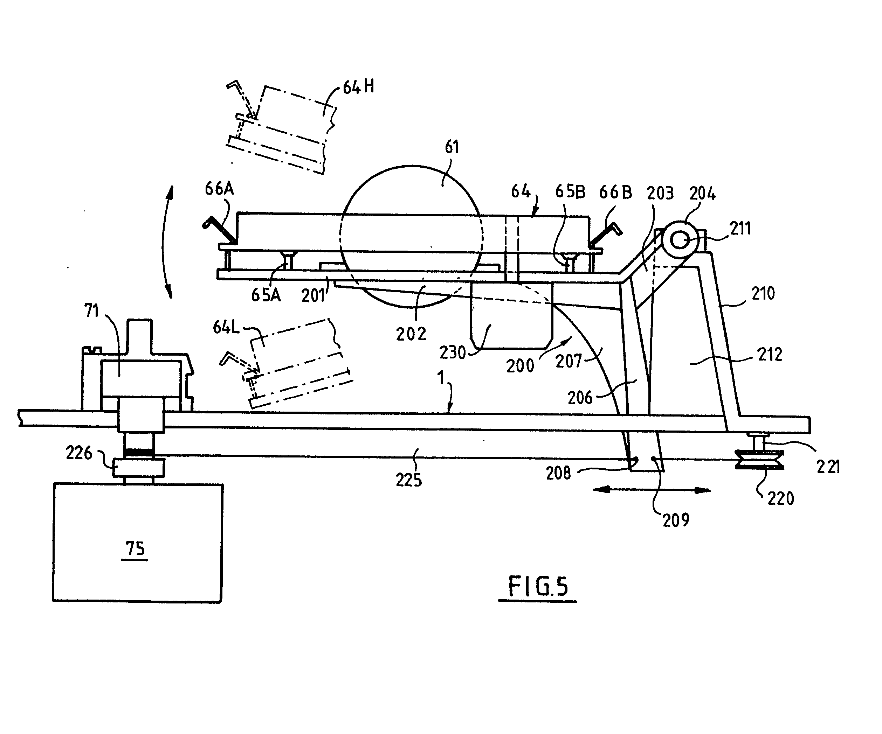

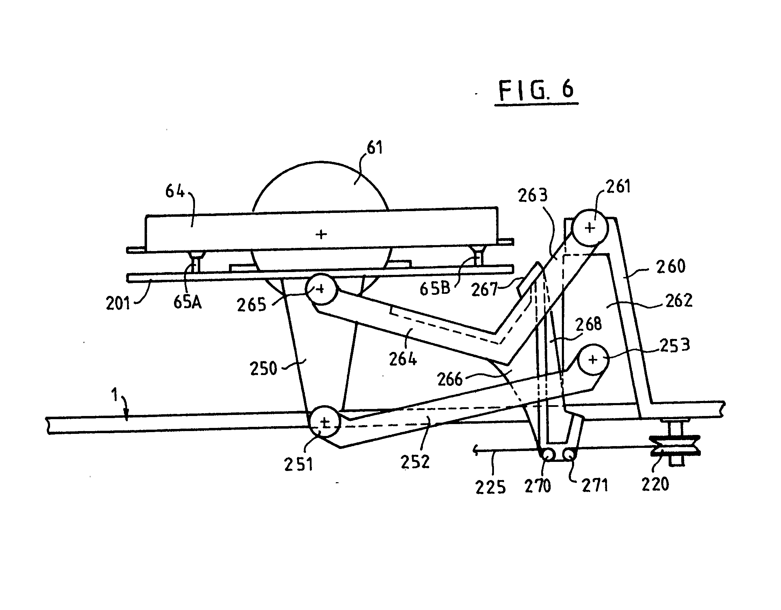

Comme le montre la figure 4C, la courroie 10 qui passe ici dans un décrochement 111a du galet 111, se trouve très près de cette plaque porteuse 1, c'est-à-dire très près du bord inférieur du chèque. Lors de son introduction dans le dispositif par le poste d'entrée 100, le chèque pourrait donc avoir tendance à remonter vers le haut, ce qui compromettrait le bon fonctionnement du dispositif. Cette difficulté est résolue ici de manière particulièrement simple: ainsi que l'illustrent les figures 3 et 4A, un support 140 porte une brosse 141 qui vient frotter au verso du chèque, près du bord supérieur de celui-ci. Il en résulte un effet de friction sur le bord supérieur du chèque, lorsque celui-ci rentre dans l'appareil. Cette friction empêche le bord avant du chèque de se relever, et le maintient par conséquent au contact de la plaque porteuse 1 jusqu'à ce qu'il soit entièrement pris en charge par la courroie 10. Par la suite, il restera, du fait de son frottement sur la courroie 10, au contact de la plaque porteuse 1.

On notera immédiatement qu'inversement, lorsque le chèque va sortir après avoir été entièrement traité, l'effet de friction dû à la brosse 141 tendra à remonter son bord libre, ce qui facilite sa préhension par l'usager.

La figure 3 fait également apparaître, auprès de la brosse 140 et 141, un organe de guidage incurvé 142 destiné à faciliter le retour du chèque entre les galets 111 et 112, même si celui-ci était légèrement incurvé en ses coins. Des organes analogues pourront bien entendu être implantées en d'autres endroits de l'appareil.

A propos de l'introduction du chèque, il convient de faire immédiatement référence à la figure 4A, qui illustre sous forme détaillée un mode de réalisation du poste d'entrée 100. Un flasque 101 possède une face verticale 102. Il est solidaire d'un prolongement horizontal 103, qui définit en regard de la face 102 une face oblique 104, formant avec la face 102 un grand V qui se ferme progressivement jusqu'à déterminer une fente 105 dans laquelle passe le chèque. Cette fente est définie par le flasque 101 et par un flasque 106 en regard. Plus en aval, des prolongements 108 et 109 définissent un V en sens inverse (considéré cette fois en section droite horizontale), après quoi on trouve les galets d'entrée 111 et 112 déjà cités.

Il apparaît maintenant que, dès lors que le chèque a subi un aller jusqu'au détecteur 119, le moteur pas à pas 120 est en mesure de l'amener en toute position désirée par rapport à l'un quelconque des postes qui se trouvent sur le trajet interne.

Ceci n'est vrai que si la courroie 10 est bien tendue. La tension est réalisée simplement, au niveau du galet 133, par le fait que celui-ci est soumis à un rappel élastique. La figure 2 montre un rappel élastique réalisé sous la forme d'une lame de ressort 136 prenant appui en deux supports 135 de la plaque porteuse 1.

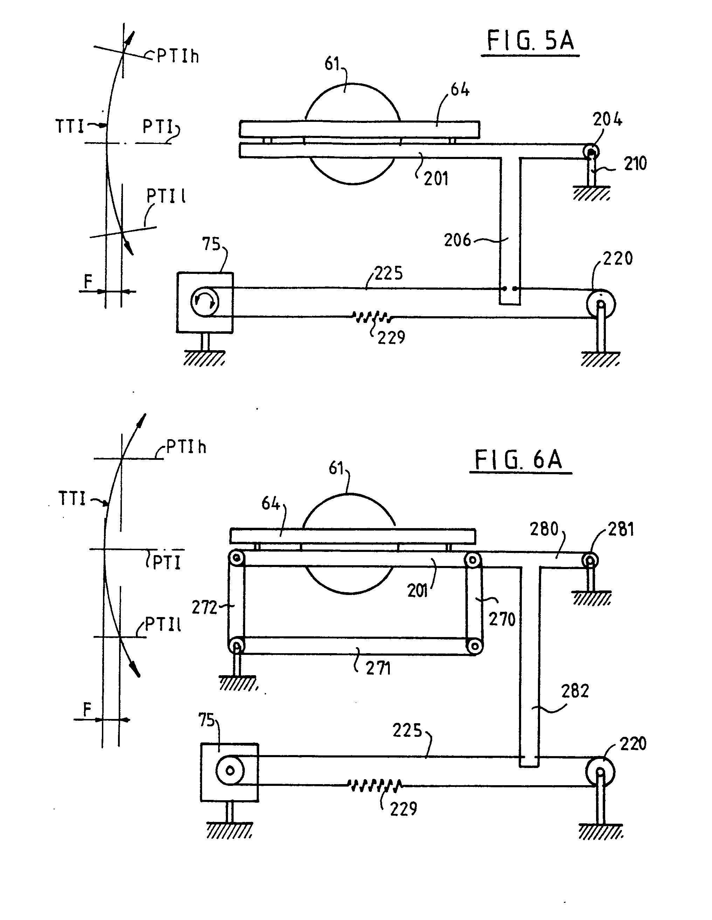

Selon une caractéristique importante de l'invention, le poste d'impression 60 (figure 2) comprend, d'un côté du trajet interne, une tête d'impression à aiguilles possédant un corps 61 et un cylindre à aiguilles 62, et cette tête d'impression est montée sur une plaque 201 et 202 (figure 5) qui s'articule sur un support 210 fixé sur la plaque porteuse 1 du dispositif. Cette plaque 201 supporte également un ruban encreur transfert en cassette 64 déplacé par un moteur lui-même supporté par la plaque 201. Des moyens d'actionnement 200 permettent d'appliquer à la tête d'impression un déplacement vertical selon un arc de cercle (noté TTI sur les figures 5A et 6A). De l'autre côté du trajet interne, le poste d'impression comprend l'enclume 180, dont la partie utile 181 est propre à opérer en toute position de la tête d'impression sur l'arc de cercle TTI.

Pour cela, l'enclume 180 et 181 peut être rendue solidaire de la plaque porteuse 1. Sa partie utile 181 possède alors une dimension horizontale au moins égale à la flèche F de l'arc de cercle TTI (figures 5A et 5B).

Avantageusement, l'enclume 180, 181 reçoit dans un décrochement 185 (figure 4B) la courroie chantée 10, en affleurement du reste de sa partie utile 181. Dans un chèque, on ne réalise pas d'impression en partie basse. Il peut donc subsister un écart entre la courroie 10 et la partie utile 181.

Pour d'autres applications, l'enclume 180 et 181 reçoit la courroie crantée 10 en continuité de sa partie utile 181, ce qui permet l'impression avec comme contre-plaque d'impression soit l'enclume elle-même, soit la courroie en appui sur le décrochement 185 de l'enclume.

En variante, comme on le verra plus loin, l'enclume peut également recevoir un ruban encreur transfert en cassette 64 bis déplacé par un moteur.

Pour plus de clarté, on décrira maintenant la partie électronique de l'appareil, en ses interactions avec les différents postes de travail que comporte le trajet interne.

Sur la figure 2, cette partie électronique comprend une unité centrale de commande 2, interconnectée avec des organes de transaction qui peuvent être de tout type connu, et opérer soit en mode local ("off-line"), soit en mode connecté ("on-line").

Ces organes de transaction vont simplement indiquer à l'unité de commande différents paramètres, comprenant au moins le montant de la transaction, qui est présumée s'établir entre un client et un commerçant, lequel a la jouissance d'un dispositif selon l'invention.

Le client donne alors au commerçant une formule de chèque vierge, et celui-ci l'introduit dans le poste d'entrée 100 de son dispositif.

Dès sa détection par le capteur 110, la formule de chèque passe dans le trajet interne, l'unité centrale 2 actionnant de manière convenable une unité 4 de commande du moteur pas à pas de défilement 121.

Le chèque va alors passer devant un poste 50 qui réalise la magnétisation des caractères CMC7 ou E13B que comporte le chèque, comme défini dans le bloc 5 de la figure 2.

Le chèque passe au droit du capteur 119, après quoi l'unité centrale 2 est en mesure de connaître la position du chèque par rapport à chacun des postes du trajet interne, comme déjà décrit. Le moteur de défilement est alors inversé et le chèque repasse à nouveau devant le poste 50 qui effectue la lecture des caractères CMC7 ou E13B. Après cette opération, l'unité centrale 2 connaît la banque émettrice du chèque. Le chèque est alors au niveau d'un poste d'impression 60.

Par un déplacement vertical de la tête d'impression, sur lequel on reviendra plus loin, l'unité centrale de commande fait agir un organe de commande d'impression 6 (et la motorisation du ruban d'impression 9) qui à son tour commande la tête d'impression à aiguilles 60, afin d'imprimer successivement sur le chèque:

le montant en chiffres dans la case BPF,

le montant en chiffres à nouveau après la formule "payez contre ce chèque",

le nom du bénéficiaire du chèque après la préposition "à",

la date et le lieu de la transaction, le lieu étant connu puisque défini par le commerçant, et la date étant mise à jour de manière classique.

Si l'endossement du chèque est un endossement variable, la motorisation du ruban d'impression 9 est arrêtée et la motorisation du ruban d'impression d'endos 9 bis est mis en marche et la frappe des éléments propres à l'endossement (caractères alphanumériques) est réalisée par la tête d'impression 60, l'impression s'effectuant à travers le chèque.

Il convient d'insister sur le fait que les opérations de magnétisation et de lecture des caractères CMC7, ou E13B, les opérations d'impression ligne par ligne sur le chèque, et d'autres opérations ultérieures nécessitent de constants allersretours du chèque le long du trajet interne, ce qui est rendu possible ici par le fait que l'unité centrale 2 connaît la position du chèque à tout moment par rapport à chacun des postes.

Après avoir été imprimé en clair, le chèque revient en arrière jusqu'à un niveau d'un poste 70 pour l'impression de son montant en caractères CMC7 ou E13B, en continuité de la piste CMC7 ou E13B (voir figure 1).

A cet effet, une roue 71 à caractères CMC7 ou E13B, munie d'un capteur de référence de position schématisé en 72 (figure 3) peut être mise en rotation pour amener séquentiellement les caractères voulus derrière un ruban 73 d'un dévidoir 74, qui est au contact du recto du chèque. De l'autre côté, un marteau 79 est sous le contrôle d'un électro-aimant 77. La position de la roue 71 est définie par un moteur pas à pas 75. Le moteur pas à pas 75 et l'électro-aimant 77 sont sous le contrôle du bloc 7 de la figure 2.

Comme on le verra plus loin, le moteur 75 sert également d'organe moteur pour le déplacement vertical de la tête d'impression, ceci étant rendu possible par la grande simplicité de ce déplacement.

Si on le désire, les nouveaux caractères CMC7 ou E13B qui viennent d'être imprimés peuvent être relus par le poste 50 et sa tête de lecture 51.

Enfin, l'unité centrale de commande 2 peut encore actionner un bloc 8 qui, à son tour, excite un électroaimant 87, de sorte qu'un tampon encré 89 applique au verso du chèque la formule d'endos fixe du commerçant détenteur du dispositif.

Tout ceci étant terminé, le chèque peut alors être restitué au poste d'entrée 100, pour être signé au recto par le client, et, immédiatement ou plus tard, au verso par le commerçant, aux fins d'endos.

Toute anomalie dans le remplissage du chèque pourra être signalée par exemple par un bruiteur, et par le fait que le chèque ne sera pas entièrement libéré du trajet interne.

Il est maintenant fait référence à la figure 5.

On y retrouve le corps 61 de la tête d'impression ainsi que le dévidoir 64 du ruban d'impression et le moteur d'entraînement de ce ruban 230. Ces deux organes sont montés sur une platine 201, munie d'une nervure de support 202. Ces deux pièces s'incurvent en 203 pour aller s'articuler en 204 sur un axe 211 solidaire d'une potence 210 à nervure 212 montée sur la plaque porteuse 1.

Au niveau de leur incurvation, les pièces 201 et 202 sont solidaires d'un montant vertical 206 à nervure 207, dont l'extrémité traverse la plaque porteuse 1 par un évidement de celui-ci, pour recevoir à fixation en des points 208 et 209 deux brins d'un filin qui s'enroule à droite sur un galet fou 220 monté sur un arbre 221 solidaire de la plaque porteuse.

A son autre extrémité, le filin s'enroule, de préférence en un ou plusieurs tours, sur l'arbre qui relie le moteur pas à pas 75 à la roue 71 d'impression CMC7 ou E13B au-dessus d'un épaulement 226 de cet arbre.

La figure 5A précise le fonctionnement de ce montage avec un schéma, dans lequel le filin 225, horizontal sur la figure 5, est maintenant représenté vertical pour une meilleure compréhension.

L'homme de l'art notera au passage que le filin 225 est muni d'un ressort 229, pour compenser ses variations de longueur dues au mouvement en arc du montant 206.

Il est clair que, par la rotation du moteur 75, le déplacement axial du filin va faire tourner la tête d'impression 61 autour de son axe 204.

Cette tête suit alors un trajet TTI, entre une position intermédiaire PTI, où la tête imprime parallèlement aux lignes matérialisées sur le chèque, et des positions extrêmes PTIh et PTII, où la tête imprime de façon légèrement inclinée.

La Demanderesse a observé qu'une légère inclinaison de l'impression est tout à fait tolérable, et d'ailleurs très peu perceptible à l'oeil nu.

Bien entendu, la flèche F de l'arc de cercle TTI est inférieure ou égale à la surface utile 181 de l'enclume 180, comme déjà mentionné.

La figure 5 montre les positions haute et basse, 64H et 64L que prend l'ensemble d'impression, limité ici à sa partie extrême gauche, où l'on ne voit que le dévidoir 64.

Une variante de l'invention est illustrée sur la figure 6.

Le montage de la tête d'impression 61 et du dévidoir 64, supporté par des pions 65A et 65B, sur une platine 201, est le même que précédemment.

par contre, la platine 201 est ici supportée par une structure formant parallélogramme déformable, articulée sur le bâti.

Différentes réalisations sont possibles.

Dans celle illustrée sur la figure 6, la platine 201 est solidaire d'un montant vertical 250 possédant deux points d'articulation 251 et 265.

Le point d'articulation 251 reçoit un bras 252 qui s'articule en 253 sur la potence 260 et 262, elle-même solidaire de la plaque porteuse 1.

Le point d'articulation 265 de la pièce 250 reçoit un bras incurvé en deux parties 264 et 263, qui vient s'articuler en 261 en haut de la potence 260.

Une structure formant couteau est définie par une pièce verticale 268, munie d'une nervure 266, et d'un coin 267, ces pièces venant en prise comme illustré sur le montant incurvé 263, 264.

Et c'est alors le bas de cette pièce 268 qui reçoit en 270 et 271 les deux bras du filin, qui s'enroulent sur le galet fou 220, le reste étant semblable à la figure 5.

L'homme de l'art comprendra que le mouvement vertical de la tête d'impression 61 est obtenu comme précédemment selon un arc de cercle. La différence avec le montage de la figure 5 réside en ce que la tête d'impresion reste maintenant parallèle à elle-même lors de son mouvement en arc. Les lettres seront donc légèrement déplacées si l'on compare une ligne à une autre, mais elles seront rigoureusement verticales dans chaque ligne. Ce déplacement peut être très facilement compensé grâce à l'unité centrale à microprocesseur et la connaissance exacte du chèque grâce à l'entraînement par moteur pas à pas.

La figure 6A illustre la structure à parallélogramme déformable dans une autre version schématisée.

La platine 201 constitue l'un des bras d'un parallélogramme déformable comprenant trois autres bras 270, 271 et 272, l'articulation entre ces derniers étant solidaire de la plaque porteuse 1.

L'articulation entre 201 et 270 est solidaire d'un bras horizontal 280 qui s'appuie en 281 sur l'axe solidaire de la plaque porteuse 1. Le bras 280 est encore solidaire d'un montant vertical 282 qui se fixe comme précédemment sur les deux bras du filin 225.

Le schéma donné à gauche de la figure 6A montre que la tête d'impression se déplace entre les positions PTII et PTIh en restant parallèle à elle-même.

L'un des avantages du dispositif décrit ci-dessus est qu'il permet un déplacement contrôlé du chèque à une vitesse linéaire de l'ordre de 500 mm par seconde, d'où il résulte la possibilité d'envisager de nombreux allers-retours du chèque à l'intérieur du trajet interne, comme cela découle de la description ci dessus, sans que l'établissement du chèque ne prenne un temps prohibitif.

La figure 2A résume l'ensemble des étapes 20 à 29 qui vont constituer l'établissement du chèque, matérialisant ainsi les opérations que va commander successivement l'unité centrale 2 de la figure 2.

A partir de la possibilité d'un cheminement aller retour dans le trajet interne, la Demanderesse a découvert que, de façon a priori surprenante, il est possible d'utiliser une tête de lecture non seulement pour la lecture des caractères, CMC7 ou E13B, mais aussi pour la magnétisation nécessaire de ceux-ci. Jusqu'à présent, on a toujours procédé en utilisant deux têtes séparées, les constructeurs vendant une tête de magnétisation et une tète de lecture distinctes.

En variante, la tête demagnétisation est parfois remplacée par un aimant permanent.

La Demanderesse a découvert qu'une tête de lecture comme celle vendue par la Société du Royaume-Uni Magnetic Components Limited sous la référence numérique 17851, pouvait parfaitement supporter sous 24 Volts un courant de magnétisation de l'ordre de 10 à 15 milli-Ampères, pendant un temps suffisant pour réaliser la pré-magnétisation des caractères CMC7 ou E13B d'un chèque.

Il suffit al'ors de prévoir un commutateur électronique, par exemple du type CMOS, permettant de connecter la tête 51 (figure 3) soit à un circuit de magnétisation, soit aux organes de lecture classiquement associés à une telle tête.

Le dispositif décrit plus haut a vocation à être implanté chez les commerçants pour leur permettre la rédaction automatique des chèques de leurs clients, ainsi que la préparation complète des chèques non seulement pour les formalités d'endos propres au commerçant, mais aussi pour celles de post-marquage qui intéressent la banque.

A cet égard, on notera que les inscriptions en clair sur le chèque peuvent être effectuées soit sous la forme d'une police de caractères normale soit sous la forme d'une police de caractères à double largeur et/ou double hauteur.

Mais le dispositif selon l'invention peut également servir aux banquiers eux-mêmes, par exemple pour les chèques de retrait qu'ils donnent à leurs clients et qu'ils doivent encaisser ainsi que libeller à leur ordre.

Enfin, sous réserve d'aménagements relatifs aux formalités d'endos, ainsi qu'au nom du bénéficiaire du chèque, la machine peut servir plus largement, tant dans les banques que dans des commerces ou groupes de commerçants opérant avec des raisons sociales différentes.

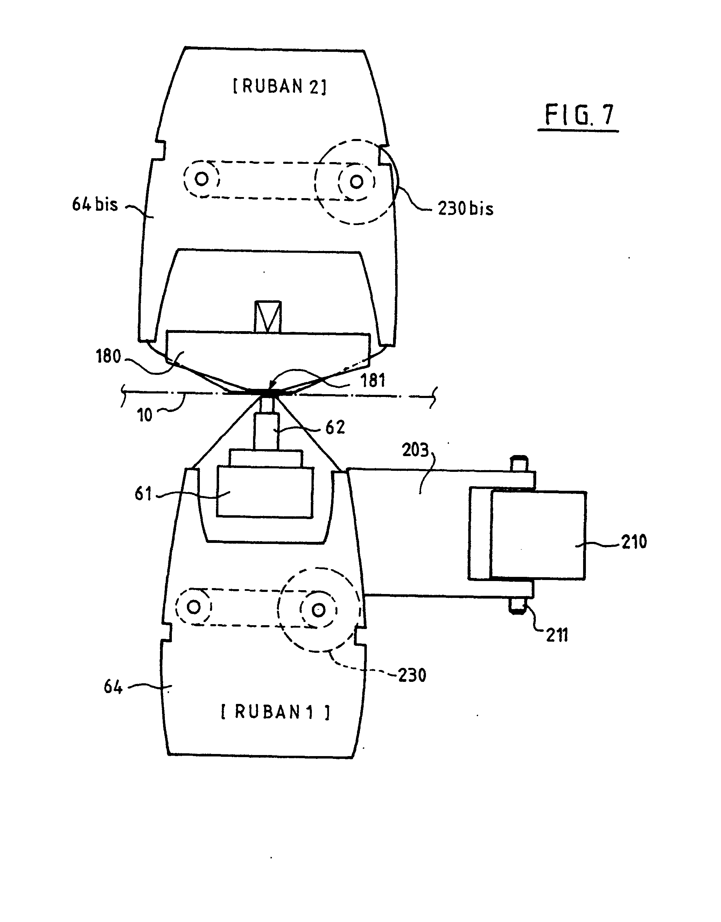

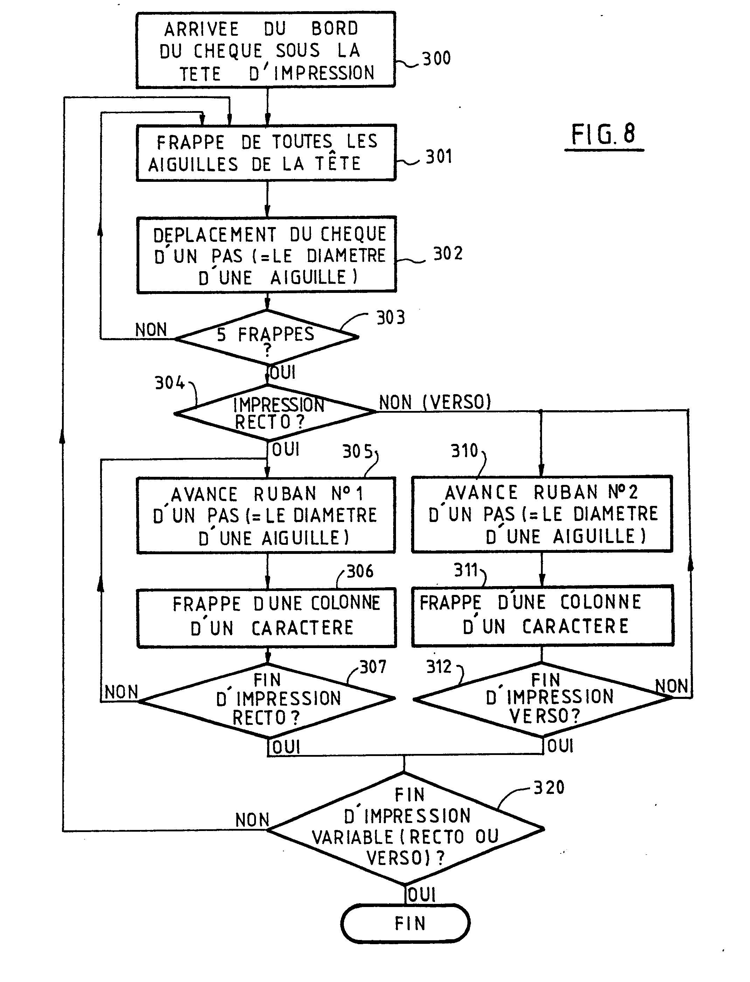

Il est alors souhaitable de pouvoir imprimer un endos variable au verso du chèque. C'est ce que permet la variante des figures 7 et 8.

Cette variante fait apparaître un autre aspect fort intéressant de l'invention, à savoir l'impression recto/verso, au choix, avec la même tête d'impression, et deux rubans à transfert d'encre, placés de part et d'autre du document à imprimer.

Sur la figure 7, le trajet du chèque est rappelé par l'emplacement de passage de la courroie 10.

En plus de la tête d'impression 60,61 et de son dévidoir de ruban 64 à moteur 230, côté recto, l'ensemble étant mobile, comme décrit précédemment, autour de l'axe 211, le poste d'impression 60 comprend aussi, du côté verso, un autre dévidoir de ruban 64bis, à moteur 230bis indépendant; l'autre ruban passe sur l'enclume d'impression 180, 181.

Le principe d'impression est le suivant:

on frappe d'abord au moins une verticale de points, recto et verso, en un emplacement non significatif du chèque ou sur un autre support inséré à cet effet au poste d'impression; les deux rubans sont ainsi "blanchis",

pour imprimer ensuite au recto (ou au verso), on déplace seulement le ruban du dévidoir 64 (respectivement 64bis), en même temps que le chèque. Dans le cas de l'impression verso, les commandes de la tête se font naturellement comme si l'on écrivait à l'envers au recto (symétrie miroir).

Le dévidoir de ruban 64bis peut être fixe, avec un ruban large couvrant par exemple deux lignes successives d'écriture, ce qui suffit pour un endos. Pour d'autres applications, le dévidoir de ruban 64bis et son moteur 230bis peuvent être fixés sur la platine qui supporte le dévidoir 64 et son moteur 230, et rendus par là solidaires de ceux-ci. L'impression peut alors se faire au recto et/ou au verso sur toute la surface du titre.

Un exemple de commande détaillée du poste d'impression 60 est illustré sur la figure 8, avec la convention que "ruban 1" désigne le ruban recto et "ruban 2" le ruban verso.

L'étape 300 est la détection (organe 119) du fait que le bord avant du chèque est arrivé sous la tête d'impression.

L'étape 301 consiste à actionner toutes les aiguilles de la tête d'impression 61.

Pour blanchir complètement les deux rubans, ceci est répété cinq fois en avançant le chèque, à chaque fois, du diamètre des aiguilles d'impression (étages 302 et 303, bouclant sur 301).

Le test 304 détermine alors si l'on veut imprimer au recto ou au verso.

S'il s'agit du recto, on avance le ruban 1 du diamètre d'une aiguille (étape 305), puis on frappe une colonne, selon les besoins d'un caractère à imprimer (étape 306) et ce jusqu'à la fin de l'impression (étape 307, bouclant sur 305).

S'il s'agit du verso, les étapes 310 à 312 font de même, sauf que l'étape 310 avance le ruban 2, et que, par logiciel, le texte est écrit à l'envers.

En pratique, l'étape 304 amène également le chèque à la première position d'impression, et il est déplacé ensuite comme requis pour l'impression.

Si, après la fin (320) de l'impression d'un côté du chèque, il faut imprimer immédiatement de l'autre côté, on retourne bien sûr à l'étape 301.

L'homme de l'art comprendra que ceci s'applique non seulement aux chèques, mais à de nombreux dispositifs d'impression de toutes natures, en particulier ceux décrits dans les brevets et demandes de brevet antérieurs précités.

## Revendications

1. Dispositif de traitement de titres, en particulier de chèques (CH), comportant des moyens pour entraîner le titre, à partir d'une entrée (100), selon un trajet interne (110—120) du dispositif, ces moyens d'entraînement comprenant une courroie (10) qui s'appuie sur des galets (111—120, 131—139) montés sur une plaque porteuse (1) pour suivre un circuit fermé dont une partie définit ledit trajet interne, lequel passe au niveau d'un poste d'impression (60), comprenant, d'un côté du trajet interne, une tête d'impression (61, 62) montée sur la plaque porteuse (1) du dispositif, cette tête d'impression (61, 62) étant sujette à un déplacement vertical, et de l'autre côté du trajet interne, une enclume (180, 181) propre à opérer en toutes positions de la tête d'impression, caractérisé en ce que le montage de la tête d'impression (61, 62) sur la plaque porteuse (1) du dispositif est par articulation (204, 210), le déplacement vertical de la tête d'impression (61, 62) étant donc selon un arc de cercle (TTI) tandis que l'enclume est propre à opérer sur ledit arc de cercle (TTI).

2. Dispositif selon la revendication 1, caractérisé en ce que l'enclume (180, 181) possède une partie utile (181) de dimension horizontale au moins égale à la flèche (F) dudit arc de cercle (TTI).

3. Dispositif selon la revendication 2, caractérisé en ce que l'enclume (180, 181) est solidaire de la plaque porteuse (1).

4. Dispositif selon la revendication 3, caractérisé en ce que l'enclume (180, 181) reçoit dans un décrochement (185) ladite courroie (10), en affleurement du reste de sa partie utile (181).

5. Dispositif selon la revendication 4, caractérisé en ce que l'enclume reçoit la courroie (10) en continuité de sa partie utile (181).

6. Dispositif selon l'une des revendications 1 à 5, caractérisé en ce que la tête d'impression (61, 62) est simplement articulée (204) sur un bâti (210).

7. Dispositif selon l'une des revendications 1 à 5, caractérisé en ce que la tête d'impression (61, 62) est montée sur un bras (201) d'une structure (250, 252, 260, 263, 264; 270—277) articulée en parallélogramme déformable, ce qui lui permet de suivre un trajet en arc de cercle tout en restant parallèle à elle-même.

8. Dispositif selon l'une des revendications 1 à 7, caractérisé en ce que la tête d'impression (61, 62) est une tête d'impression à aiguilles.

9. Dispositif selon l'une des revendications 1 à 8, caractérisé en ce que, la courroie entraînant le titre le long d'un bord longitudinal de celui-ci, il est prévu, en aval du premier galet (112) où le titre passe entre galet et courroie un moyen de freinage du titre, tel qu'une brosse (140, 141), placé le long de son bord longitudinal opposé, ce qui permet d'assurer que le titre est bien introduit, avec son bord longitudinal au contact de ladite plaque porteuse (1).

10. Dispositif selon la revendication 9, caractérisé en ce qu'il comporte, en amont dudit premier galet (112), un détecteur (110) de présence du titre, tel qu'une barrière photoélectrique, placé au voisinage immédiat de ladite plaque porteuse (1).

11. Dispositif selon l'une des revendications 1 à 10, caractérisé en ce qu'il comporte, au niveau du poste d'impression (60), un autre détecteur de présence (119), tel qu'une barrière photoélectrique, également placé au voisinage immédiat de la plaque d'appui, ce qui fournit une référence de position relativement à deux bords du titre pour l'impression sur celui-ci.

12. Dispositif selon l'une des revendications 1 à 11, dans lequel le titre est un chèque (CH) ou analogue, muni de caractères standardisés lisibles automatiquement, caractérisé en ce qu'il est prévu le long du trajet interne un poste (50) de lecture de ces caractères, ce qui permet de reconnaître le titre ou son émetteur et de déterminer le format d'impression sur ce titre.

13. Dispositif selon la revendication 12, caractérisé en ce que les caractères standardisés étant du type magnétique codé, le poste de lecture comprend une tête de lecture (51) de ces caractères, tête qui est aussi utilisée avant lecture pour la magnétisation des mêmes caractères.

14. Dispositif selon la revendication 13, caractérisé en ce que le titre est pressé contre ladite tête magnétique (51) par une lame de ressort (170).

15. Dispositif selon l'une des revendications 12 à 14, caractérisé en ce que le trajet interne comporte encore un poste (70) d'inscription de caractères standardisés, aux fins du post-marquage immédiat du chèque par son montant inscrit en ces caractères standardisés.

16. Dispositif selon la revendication 15, caractérisé en ce que le même moteur, en particulier un moteur pas à pas (75), réalise l'entraînement vertical de la tête d'impression (60, 61), et celui du poste (70) d'inscription de caractères standardisés.

17. Dispositif selon l'une des revendications précédentes, caractérisé en ce que la courroie (10) est une courroie crantée entraînée par un galet cranté (120) monté sur l'arbre d'un moteur pas à pas (121) et tendue (133, 134, 135) en dehors dudit trajet interne.

18. Dispositif selon la revendication 17, caractérisé en ce qu'il est prévu, à l'entrée du trajet interne, un galet (111) de renvoi de la courroie muni d'un décrochement (111A) sur lequel la courroie passe en affleurement du reste de la surface de ce galet.

19. Dispositif selon l'une des revendications 1 à 18, caractérisé en ce qu'il comporte aussi un poste (80) propre à l'inscription, au verso du titre, d'une formule d'endos.

20. Dispositif selon l'une des revendications 1 à 18, caractérisé en ce qu'il comporte des moyens (60, 64bis) pour l'inscription d'un endos variable.

21. Dispositif selon la revendication 8, caractérisé en ce que le poste d'impression (60) comprend deux dérouleurs de deux rubans à transfert d'encre (64, 64bis), ces rubans passant de part et d'autre du titre, étant mus indépendamment l'un de l'autre (230, 230bis), tandis que, préalablement à l'impression utile sur une seule face du titre, les deux rubans sont blanchis par actionnement au moins une fois de toutes les aiguilles de la tête d'impression.

**Patentansprüche**

1. Vorrichtung zum Bearbeiten von Belegen, insbesondere von Schecks (CH) mit Mitteln zum Führen des Belegs von einem Eingang (100) entlang eines internen Wegs (110—120) der Vorrichtung, wobei diese Mittel zum Führen ein Transportband (10) umfassen, das sich auf Rollen (111—120, 131—139) stützt, die auf einer Trägerplatte (1) montiert sind, um einen geschlossenen Kreislauf zu durchlaufen, von dem ein Teil den internen Weg bildet, der an einer Druckstelle (60) vorbeigeht, mit, auf der einen Seite des internen Wegs, einem Druckkopf (61, 62), der auf der Trägerplatte (1) der Vorrichtung montiert ist, wobei dieser Druckkopf (61, 62) einer vertikalen Bewegung unterworfen ist, und, auf der anderen Seite des internen Wegs, einem Amboß (180, 181), der geeignet ist, in allen Stellungen des Druckkopfes zu arbeiten, dadurch gekennzeichnet, daß die Montage des Druckkopfes (61, 62) auf der Trägerplatte (1) der Vorrichtung über ein Gelenk (204, 210) erfolgt, wobei die vertikale Bewegung des Druckkopfes (61, 62) auf einem Kreisbogen (TTI) erfolgt, während der Amboß geeignet ist, auf dem Kreisbogen (TTI) zu arbeiten.

2. Vorrichtung nach Anspruch 1, dadurch gekennzeichnet, daß der Amboß (180, 181) einen Nutzbereich (181) mit einer horizontalen Ausdehnung umfaßt, die wenigstens gleich der Biegung (F) des Kreisbogens (TTI) ist.

3. Vorrichtung nach Anspruch 2, dadurch gekennzeichnet, daß der Amboß (180, 181) mit der Trägerplatte (1) verbunden ist.

4. Vorrichtung nach Anspruch 3, dadurch gekennzeichnet, daß der Amboß (180, 181) in einem Absatz (185) das Transportband (10) bündig mit dem Rest seines Nutzbereiches (181) aufnimmt.

5. Vorrichtung nach Anspruch 4, dadurch gekennzeichnet, daß der Amboß das Transportband (10) kontinuierlich in seinem Nutzbereich (181) aufnimmt.

6. Vorrichtung nach einem der Ansprüche 1 bis 5, dadurch gekennzeichnet, daß der Druckkopf (61, 62) einfach mit einem Gelenk (204) auf einem Trägerelement (210) befestigt ist.

7. Vorrichtung nach einem der Ansprüche 1 bis 5, dadurch gekennzeichnet, daß der Druckkopf (61, 62) auf einem Arm (201) einer Struktur (250, 252, 260, 263, 264; 270—277), die in einem parallelogramm gelenkig und verformbar angeordnet ist, montiert ist, was ihm erlaubt, einem Kreisbogen zu folgen, wobei er parallel zu sich selbst bleibt.

8. Vorrichtung nach einem der Ansprüche 1 bis 7, dadurch gekennzeichnet, daß der Druckkopf ein Nadeldruckkopf ist.

9. Vorrichtung nach einem der Ansprüche 1 bis 8, dadurch gekennzeichnet, daß, wenn das Transportband den Beleg entlang eines longitudinalen Rands desselben führt, unterhalb der ersten Rolle (112), wo der Beleg zwischen der Rolle und dem Transportband passiert, eine Belegbremsvorrichtung vorgesehen ist, wie etwa eine Bürste (140, 141), die entlang seines gegenüberliegenden, longitudinalen Randes angeordnet ist, was ermöglicht, sicherzustellen, daß der Beleg richtig eingeführt wird, mit seinem longitudinalen Rand in Berührung mit der Trägerplatte (1).

10. Vorrichtung nach Anspruch 9, dadurch gekennzeichnet, daß sie oberhalb der ersten Rolle (112) einen Anwesenheitsdetektor (110) für den Beleg aufweist, wie etwa eine photoelektrische Barriere, der in unmittelbarer Nachbarschaft zur Trägerplatte (1) angeordnet ist.

11. Vorrichtung nach einem der Ansprüche 1 bis 10, dadurch gekennzeichnet, daß sie auf der Höhe der Druckstelle (60) einen weiteren Anwesenheitsdetektor (119), wie etwa eine photoelektrische Barriere, aufweist, der ebenfalls in unmittelbarer Nachbarschaft zur Stützplatte angeordnet ist, was einen Referenzwert für die relative Stellung der beiden Ränder des Belegs zum Drucken darauf liefert.

12. Vorrichtung nach einem der Ansprüche 1 bis 11, bei der der Beleg ein Scheck (CH) oder etwas analoges ist, der mit automatisch lesbaren Standardzeichen ausgerüstet ist, dadurch gekennzeichnet, daß entlang der internen Wegs eine Lesestelle (50) für diese Zeichen vorgesehen ist, was erlaubt, den Beleg oder seinen Aussteller zu erkennen und das Format des Aufdrucks auf diesem Beleg zu bestimmen.

13. Vorrichtung nach Anspruch 12, dadurch gekennzeichnet, daß die Standardzeichen von einer magnetisch kodierten Art sind und daß die Lesestelle einen Lesekopf (51) für diese Zeichen umfaßt, der vor dem Lesen auch für die Magnetisierung derselben Zeichen verwendet wird.

14. Vorrichtung nach Anspruch 13, dadurch gekennzeichnet, daß der Beleg durch ein Federblatt (170) gegen den Magnetkopf (51) gedrückt wird.

15. Vorrichtung nach einem der Ansprüche 12 bis 14, dadurch gekennzeichnet, daß der interne Weg außerdem eine Schreibstelle (70) für Standardzeichen am Ende der unmittelbaren Nachmarkierung des Schecks durch seinen in Standardzeichen geschriebenen Betrag aufweist.

16. Vorrichtung nach Anspruch 15, dadurch gekennzeichnet, daß derselbe Motor, insbesondere ein Schrittmotor (75), die vertikale Bewegung des Druckkopfes (60, 61) und der Schreibstelle (70) für Standardzeichen ausführt.

17. Vorrichtung nach einem der vorhergehenden Ansprüche, dadurch gekennzeichnet, daß am Eingang des internen Wegs eine Umlenkrolle (111) für das Transportband vorgesehen ist, die mit einem Absatz (111A) versehen ist, auf dem das Transportband bündig mit dem Rest der Oberfläche dieser Rolle entlangläuft.

19. Vorrichtung nach einem der Ansprüche 1 bis 18, dadurch gekennzeichnet, daß sie außerdem eine Stelle (80) aufweist, die geeignet ist, auf der Rückseite des Belegs eine Rückseiteninschrift zu schreiben.

20. Vorrichtung nach einem der Ansprüche 1 bis 18, dadurch gekennzeichnet, daß sie Vorrichtungen (60, 64bis) zum Schreiben einer variablen Rückseiteninschrift umfaßt.

21. Vorrichtung nach Anspruch 8, dadurch gekennzeichnet, daß die Druckstelle (60) zwei Abwickler für zwei Tintentransferbänder (64, 64bis) umfaßt, wobei diese Bänder auf der einen und anderen Seite des Belegs entlanggehen und voneinander unabhängig bewegt werden (230, 230bis), während vor der Nutzaufschrift auf einer einzigen Seite des Belegs die beiden Bänder durch eine wenigstens einmalige Bewegung aller Nadeln des Druckkopfes entfärbt werden.

## Claims

1. Device for processing documents, in particular cheques (CH), comprising means of driving the document from an inlet (100), along an internal path (110-120) of the device, these drive means comprising a belt (10) supported on rollers (111—120, 131—139), which are mounted on a carrying plate (1), to follow a closed circuit, part of which defines said internal path, which passes a printing station (60), comprising, on one side of the internal path, a vertically displaceable printing head (61, 62), and on the other side of the internal path, a anvil (180, 181) to operate in all positions of the printing head, characterised in that the mounting of the printing head (61, 62) on the carrying plate (1) of the device is effected by articulation (204, 210), vertical displacement of the printing head (61, 62) therefore being effected along the arc of a circle (TTI), whereas the anvil is intended to operate on said arc of the circle (TTI).

2. Device according to claim 1, characterised in that the anvil (180, 181) has a usable part (181) of horizontal dimension at least equal to the arrow (F) of said arc (TTI).

3. Device according to claim 2, characterised in that the anvil (180, 181) is fixed to the carrying plate (1).

4. Device according to claim 3, characterised in that the anvil (180, 181) receives said belt (10) in a recess (185), flush with the rest of its usable part (181).

5. Device according to claim 4, characterised in that the anvil receives the belt (10) in continuity with its usable part (181).

6. Device according to one of claims 1 to 5, characterised in that the printing head (61, 62) is hinged simply (204) to a frame (210).

7. Device according to one of claims 1 to 5, characterised in that the printing head (61, 62) is mounted on an arm (201) of a structure (250, 252, 260, 263, 264; 270—277) hinged in the manner of a deformable parallelogram, which allows said structure to follow an arcuate path whilst remaining parallel with itself.

8. Device according to one of claims 1 to 7, characterised in that the printing head (61, 62) is a needle printing head.

9. Device according to one of claims 1 to 8, characterised in that whilst the belt drives the document along a longitudinal edge thereof, a braking means such as a brush (140, 141) is provided for the document downstream of the first roller (112) where the document passes between the roller and the belt and is located along the opposite longitudinal edge of said document, this braking means ensuring that the document has been correctly inserted, with its longitudinal edge in contact with said carrying plate (1).

10. Device according to claim 9, characterised in that it comprises, upstream of the first roller (112) a device (110) for detecting the presence of the document, such as a photoelectric barrier located immediately next to said carrying plate (1).

11. Device according to one of claims 1 to 10, characterised in that it comprises, near the printing station (60), a further presence detector (119), such as a photoelectric barrier, also placed immediately next to the supporting plate, which provides a position reference relative to the two edges of the document for printing thereon.

12. Device according to one of claims 1 to 11, in which the document is a cheque (CH) or the like, having standard automatically legible characters, characterised in that along the internal path a reading station (50) is provided for reading these characters, whereby the document or its drawer can be recognised and the printing format on this document can be determined.

13. Device according to claim 12, characterised in that the standard characters are of the magnetically coded type and the reading station comprises a reading head (51) for reading these characters, which head is also used before reading to magnetise the same characters.

14. Device according to claim 13, characterised in that the document is pressed against said magnetic head (51) by a spring blade (170).

15. Device according to one of claims 12 to 14, characterised in that the internal path comprises a further station (70) for printing standard characters, for the immediate inscription of the cheque with its amount written in these standard characters.

16. Device according to claim 15, characterised in that the same motor, in particular a stepper motor (75), carries out the vertical drive of the printing head (60, 61) and of the station (70) for inscribing standard characters.

17. Device according to one of the preceding claims, characterised in that the belt (10) is a notched belt driven by a notched roller (120) mounted on the shaft of a stepper motor (121) and tightened (133, 134, 135) outside said internal path.

18. Device according to claim 17, characterised in that a roller (111) is provided at the inlet of the internal path for reversing the belt and provided with a recess (111A) on which the belt passes flush with the rest of the surface of said roller.

19. Device according to one of claims 1 to 18, characterised in that it also comprises a station (80) for printing, on the reverse of the document, an endorsement formula.

20. Device according to one of claims 1 to 18, characterised in that it comprises means (60, 64b) for inscribing a variable endorsement.

21. Device according to claim 8, characterised in that the printing station (60) comprises two drives for two ink transfer ribbons (64, 64b), these ribbons passing on either side of the document and being moved independently of one another (230, 230b), whereas, prior to useful printing on a single face of the document, the two ribbons are wiped by actuation at least once of all the needles of the printing head.

## FIG. 1

CH

(N° CHEQUE)                                    B P. F _____

# BANQUE XYZ

PAYEZ CONTRE CE CHEQUE _____

_____

A _____

PAYABLE A _____ _____ LE _____19 __

| N° COMPTE ET IDENTIFICATION DU TITULAIRE |

(N° CHEQUE)    (IDENTIFICATION BANQUE+AGENCE;N°COMPTE) [MONTANT]

PISTE CMC7

## FIG. 2

PREMAGNETISATION PUIS LECTURE CMC7

IMPRESSION DU CHEQUE (EN CLAIR)

IMPRESSION DU MONTANT (EN CMC7)

MOTORISATION RUBAN 1

DEPL. VERTICAL DE LA TETE D'IMPRESSION

COMMANDE DU MOTEUR PAS A PAS DE DEFILEMENT

ORGANES DE TRANSACTION

UNITE CENTRALE DE COMMANDE

MOTORISAT. RUBAN 2

IMPRESSION DE L'ENDOS FIXE

EP 0 191 678 B1

**FIG. 2A**

```
20 ─┐  ┌──────────────────────────────┐
    └─│ CONCLUSION D'UNE TRANSAC-    │
      │ -TION CLIENT / COMMERÇANT    │
      └──────────────┬───────────────┘
                     ▼
21 ─┐  ┌──────────────────────────────┐
    └─│  ADMISSION  D'UNE            │
      │  FORMULE  DE CHEQUE          │
      │  VIERGE DU CLIENT            │
      └──────────────┬───────────────┘
                     ▼
22 ─┐  ┌──────────────────────────────┐
    └─│ PREMAGNETISATION  DES        │
      │  CARACTERES  CMC7            │
      └──────────────┬───────────────┘
                     ▼
23 ─┐  ┌──────────────────────────────┐
    └─│  LECTURE  DES                │
      │  CARACTERES  CMC7            │
      └──────────────┬───────────────┘
                     ▼
24 ─┐  ┌──────────────────────────────┐
    └─│ DETERMINATION  DE LA         │
      │ BANQUE "TIREE" ET DU         │
      │ FORMAT D'IMPRESSION          │
      └──────────────┬───────────────┘
                     ▼
```

25 IMPRESSION DU CHEQUE EN CLAIR : MONTANT (2 FOIS), BENEFICIAIRE, LIEU ET DATE

28 bis — EVENTUELLEMENT IMPRESSION D'UN ENDOS (SI VARIABLE)

26 IMPRESSION DU MONTANT EN CARACTERES CMC7 (POST-MARQUAGE)

27 RELECTURE DES CARACTERES CMC7

28 IMPRESSION DE L'ENDOS FIXE

29 RESTITUTION DU CHEQUE POUR SIGNATURE

2

FIG. 3

EP 0 191 678 B1

FIG. 4A

FIG.4B

FIG.4C

EP 0 191 678 B1

FIG.5

EP 0 191 678 B1

FIG. 6

FIG. 5A

FIG. 6A

[RUBAN 2]

FIG. 7

64 bis

230 bis

180

181

10

62

203

61

210

211

230

64

[RUBAN 1]

FIG. 8

```
        ┌─────────────────────────┐
        │  ARRIVEE  DU  BORD       │
        │  DU CHEQUE SOUS  LA      │ ── 300
        │  TETE   D'IMPRESSION     │
        └─────────────────────────┘
                    │
        ┌─────────────────────────┐
        │  FRAPPE  DE TOUTES LES   │ ── 301
        │  AIGUILLES DE LA TÊTE    │
        └─────────────────────────┘
                    │
        ┌─────────────────────────┐
        │  DEPLACEMENT DU CHEQUE   │
        │  D'UN PAS (=LE DIAMETRE  │ ── 302
        │  D'UNE  AIGUILLE)        │
        └─────────────────────────┘
                    │
        NON      ╱─────────╲      303
        ◄────────  5 FRAPPES  ────
                 ╲    ?    ╱
                    │ OUI
              304 ╱─────────╲
              ────  IMPRESSION  ──── NON (VERSO)
                 ╲  RECTO?  ╱
                    │ OUI       305        310
        ┌─────────────────────┐  ┌─────────────────────┐
        │ AVANCE  RUBAN N°1    │  │ AVANCE  RUBAN N°2    │
        │ D'UN PAS(=LE DIAMETRE│  │ D'UN PAS(=LE DIAMETRE│
        │ D'UNE AIGUILLE)      │  │ D'UNE AIGUILLE)      │
        └─────────────────────┘  └─────────────────────┘
                 │  306                │  311
        ┌─────────────────────┐  ┌─────────────────────┐
        │ FRAPPE D'UNE COLONNE │  │ FRAPPE D'UNE COLONNE │
        │ D'UN  CARACTERE      │  │ D'UN  CARACTERE      │
        └─────────────────────┘  └─────────────────────┘
                 │  307         312 │
        NON  ╱─────────╲          ╱─────────╲  NON
        ◄────  FIN        ─       ─  FIN       ────►
             ╲ D'IMPRESSION       D'IMPRESSION ╱
             ╲  RECTO? ╱          ╲ VERSO? ╱
                │ OUI                 │ OUI
                    ╱─────────╲      320
        NON        ─  FIN        ────
        ◄──────────  D'IMPRESSION
                   ╲ VARIABLE(RECTO OU
                   ╲  VERSO)? ╱
                       │ OUI
                  ╭─────────╮
                  │   FIN   │
                  ╰─────────╯
```

9